# EUROPEAN PATENT SPECIFICATION

(11) **EP 2 184 875 B1**
(45) Date of publication and mention of the grant of the patent: **14.03.2012**
(21) Application number: 08105752.3
(22) Date of filing: 07.11.2008
(51) Int. Cl.: H04J 14/02

(54) **Method and device for data processing in an UDWDM network and communication system comprising such device**
Verfahren und Vorrichtung zur Datenverarbeitung in einem UDWDM-Netzwerk und Kommunikationssystem mit einer derartigen Vorrichtung
Procédé et dispositif de traitement de données dans un réseau UDWDM et système de communication comprenant un tel dispositif

(43) Date of publication of application: 12.05.2010
(73) Proprietor: Nokia Siemens Networks OY, 02610 Espoo (FI)
(72) Inventor: Rohde, Harald, 81673, München (DE); Treyer, Thomas, 81379, München (DE)
(74) Representative: Bruglachner, Thomas E.

(56) References cited:
- EP-A- 1 953 941
- US-A1- 2006 083 513
- US-A1- 2006 291 861
- AGATA A ET AL: "Success pon demonstrator: experimental exploration of next-generation optical access networks" IEEE COMMUNICATIONS MAGAZINE, IEEE SERVICE CENTER, PISCATAWAY, US, vol. 43, no. 8, 1 August 2005 (2005-08-01), pages s26-s33, XP011137981 ISSN: 0163-6804
- LEONID G KAZOVSKY ET AL: "Next-Generation Optical Access Networks" JOURNAL OF LIGHTWAVE TECHNOLOGY, IEEE SERVICE CENTER, NEW YORK, NY, US, vol. 25, no. 11, 1 November 2007 (2007-11-01), pages 3428-3442, XP011198527 ISSN: 0733-8724
- KLAUS GROBE ET AL: "PON Evolution from TDMA to WDM-PON" 24 February 2008 (2008-02-24), OPTICAL FIBER COMMUNICATION/NATIONAL FIBER OPTIC ENGINEERS CONFERENCE, 2008. OFC/NFOEC 2008. CONFERENCE ON, IEEE, PISCATAWAY, NJ, USA, PAGE(S) 1 - 7 , XP031256883 ISBN: 978-1-55752-856-8 * abstract * * chapter 2 *

## Description

The invention relates to a method and to a device for data processing in an UDWDM network and to a communication system comprising such a device.

A passive optical network (PON) is a promising approach regarding fiber-to-the-home (FTTH), fiber-to-the-business (FTTB) and fiber-to-the-curb (FTTC) scenarios, in particular as it overcomes the economic limitations of traditional point-to-point solutions.

The PON has been standardized and it is currently being deployed by network service providers worldwide. Conventional PONs distribute downstream traffic from the optical line terminal (OLT) to optical network units (ONUs) in a broadcast manner while the ONUs send upstream data packets multiplexed in time to the OLT. Hence, communication among the ONUs needs to be conveyed through the OLT involving electronic processing such as buffering and/or scheduling, which results in latency and degrades the throughput of the network.

In fiber-optic communications, wavelength-division multiplexing (WDM) is a technology which multiplexes multiple optical carrier signals on a single optical fiber by using different wavelengths (colors) of laser light to carry different signals. This allows for a multiplication in capacity, in addition to enabling bidirectional communications over one strand of fiber.

WDM systems are divided into different wavelength patterns, conventional or coarse and dense WDM. WDM systems provide, e.g., up to 16 channels in the 3rd transmission window (C-band) of silica fibers around 1550 nm. Dense WDM uses the same transmission window but with denser channel spacing.

US 2006/083523 A1 relates to a Passive Optical Network (PON) which has a trunk protection and employs Wavelength Division Multiplexer (WDM) elements in combination with optical couplers at distribution nodes (DN) intermediate a pair of Local Exchange Office Nodes and a customer node.

AGATA A ET AL: "Success PON demonstrator: experimental exploration of next-generation optical access networks" IEEE COMMUNICATIONS MAGAZINE, IEEE SERVICE CENTER, PISCATAWAY, US, vol. 43, no. 8, August 2005, pages s26-s33*,* discloses a hybrid TDM/WDM PON architecture that jointly serves multiple physical PONs to enjoy statistical multiplexing gain as well as cost sharing.

EP-A-1 953 941 relates to a PON system which comprises an OLT connected to an optical splitter via a first principal optical transmission fiber to distribute remote optical signals of a specific wavelength via first secondary optical fibers to a plurality of ONU.

US 2006/291861 A1 relates to a WDM PON which includes: a CO for transmitting downstream optical signals; a RN for distributing the downstream optical signals received from the CO; and a SUB for receiving the distributed downstream optical signals.

LEONID G KAZOVSKY ET AL: "Next-Generation Optical Access Networks" JOURNAL OF LIGHTWAVE TECHNOLOGY, IEEE SERVICE CENTER, NEW YORK, NY, US, vol. 25, no. 11,1 November 2007 (2007- 11-01), pages 3428-3442*,* relates to time-division multiplexing (TDM) systems for current PON deployments.

KLA US GROBE ET AL: "PON Evolution from TDMA to WDM-PON" 24 February 2008 (2008-02-24), OPTICAL FIBER COMMUNICATION/NATIONAL FIBER OPTIC ENGINEERS CONFERENCE, 2008. OFC/NFOEC 2008. CONFERENCE ON, IEEE, P I SCATAWAY, NJ, USA, pages 1-7, relates to WDM-PON variants proposed as solution for a unified optical access and backhauling network. Channel plans vary, but a typical system may use 40 channels at 100 GHz spacing or 80 channels with 50 GHz spacing. Some technologies are capable of 25 GHz spacing. Amplification options enable the extension of the usable wavelengths to the L-band, more or less doubling these numbers.

Optical access networks, e.g., a coherent Ultra-Dense Wavelength Division Multiplex (UDWDM) network, are deemed to be the future data access technology.

Communication networks need to be protected against failures in order to ensure a continuous communication capability. This is usually done by doubling all or parts of the equipment as well as the communication lines. In case of failure, the communication is switched to the second equipment and/or line.

The problem to be solved is to provide a protection scheme for UDWDM networks.

This problem is solved according to the features of the independent claims. Further embodiments result from the depending claims.

In order to overcome this problem, a method for data processing in an UDWDM network is provided
- wherein one of at least two OLTs communicates with at least one ONU,
- wherein the at least two OLTs are active, and
- wherein the at least two OLTs provide protection switching and/or load sharing.

Said communication of the at least two OLTs (in particular one of the at least two OLTs) with at least one ONU may comprise transmitting data from the OLTs to the at least one ONU and/or vice versa. In particular, data communication between OLT and ONU (and between OLTs) may be bidirectional. The OLTs and the at least one ONU may exchange data via an optical connection or link, e.g., via an optical network.

The approach provided allows for a protection scheme to be cost effective. In addition, a notable fast switching time is facilitated for the UDWDM network in particular in a converged metro and/or access domain.

It is noted that there may be two OLTs or several OLTs that may at least partially "protect each other" by means of said protection switching. Hence, if one OLT fails, the remaining OLTs are capable of handling the traffic of the failed OLT. This can be achieved, e.g., by providing a sufficient degree of redundancy between the OLTs. For example, each OLT may keep free a certain number of wavelengths for such redundancy purposes, e.g., in case of failure of another OLT.

It is also noted that said failure is just an exemplary reason for triggering protection switching. Another reason may be maintenance of the OLT, failure of a link, etc.

Furthermore, said load sharing may use a portion of wavelengths set aside by a particular OLT. Hence, in case of bandwidth shortage at a particular OLT, at least one of the remaining OLTs may provide wavelengths (channels) to carry traffic of this OLT under shortage. Such service can be provided temporarily until further notice or it may be triggered and/or supervised by a timer. This applies to said protection switching as well.

Hence, the term "provide protection switching and/or load sharing" may comprise the fact that at least one OLT provides redundancy functionality for all or a portion of the remaining OLTs, in particular by reserving wavelengths (channels). Such reserved wavelengths can be used for traffic from another OLT in case of this other OLT being (temporarily) out of service or in case of bandwidth or channel shortage.

As at least two OLTs are "always on", i.e. active, the protection switching as well as the load sharing can be executed almost immediately and without significant delay. This is a decisive advantage compared to a backup-OLT that, e.g., in case of failure, needs to be activated first thereby consuming a significant amount of time before being able to process traffic of the failed OLT.

It is further noted that the OLT mentioned may be a UDWDM OLT.

In an embodiment, each of the at least one ONU selects one of the at least two OLTs.

Hence, the ONU is free to select an OLT. Accordingly, also load sharing may be initiated by the ONU. For example, if an ONU detects a shortage of bandwidth or an increasing error rate (or a broken link) it may switch over to another OLT. This can be achieved without significant delay as the other OLT is already active.

In another embodiment, wavelengths supplied by the at least two OLTs are at least partially interleaved.

Interleaving wavelengths could be understood as wavelengths that are in an alternating sequence associated with the at least two OLTs. For example, if two OLTs (OLT_1 and OLT_2) are active, the total range of wavelengths can be assigned to the first and the second OLT in an alternating order, i.e. OLT_1 is assigned the first wavelength, OLT_2 occupies the second wavelength, OLT_1 obtains the third wavelength and so on.

This further reduces a delay when the ONU switches from one OLT to another OLT: As the ONU's scanning for the next free wavelength is with high probability yet successful at an adjacent wavelength (if not, the next free channel may be found two wavelengths ahead, etc.), the ONU may quickly swap to the other (new) OLT.

It is noted that each OLT provides a certain amount of wavelengths, each of which can be used as a logical channel or a logical link between the ONU and this OLT. The wavelength may be also identified by a particular frequency. The wavelength mentioned - as well as the frequency - may refer to a range or a band, i.e., a particular interval, comprising this particular wavelength (or frequency).

In a further embodiment, the at least two OLTs are connected to the at least one ONU via at least one splitter. As an option, said at least one splitter comprises a CWDM splitter.

In a next embodiment, said protection switching and/or load sharing is triggered by at least one OLT and/or by the at least one ONU.

For example, a first OLT - in case of a recognized failure (e.g., a broken connection to the core network) - may trigger switching the ONUs assigned to this first OLT to a second OLT. Also, each ONU may - independently - recognize, e.g., a broken link, and switch to a different OLT.

It is also an embodiment that at least one OLT tracks wavelengths of at least one other OLT, in particular to avoid collisions due to drifting laser sources.

In case of OLTs being operative in an interleaved mode (adjacent wavelengths being provided by alternating OLTs), each of two spectrally interleaved OLTs may track the frequencies of the other OLT(s) to avoid collisions due to drifting laser sources.

Pursuant to another embodiment, the at least one OLT follows a wavelength drift of at least one other OLT.

According to an embodiment, the at least one OLT tracks a wavelength drift of the at least one other OLT and informs this at least one other OLT to adjust its wavelength.

According to another embodiment, the at least one OLT is optically coupled to the at least one other OLT and at the least one other OLT performs an assessment of a wavelength drift based on the optically coupling and adjusts its wavelength based on the assessment.

In yet another embodiment, the at least one ONU is associated with at least one backup-wavelength.

Such at least one backup-wavelength comprises a wavelength to be used by this ONU in case of a failure (link failure, OLT failure, etc.). There may be one or more backup wavelengths assigned to at least one ONU. The backup-wavelengths may be organized as a sorted list providing a sequence and choice of backup-wavelengths to be selected for allocation purposes. The at least one backup-wavelength could be stored with the ONU or it may be stored centrally for at least one ONU. The at least one backup-wavelength could be provided (set up, amended, deleted, etc.) to the at least ONU via the optical network. The at least one backup-wavelength for at least one ONU may be planned (and/or provided) by a OLT currently connected, by a backup OLT or by a central OLT or any other network component.

According to a next embodiment, the at least two OLTs provide protection switching and/or load sharing by reserving a certain amount of wavelengths in order to provide in particular
- 1+1 redundancy; or
- 1:N redundancy.

The problem stated above is also solved by a device comprising a and/or being associated with a processor unit and/or a hard-wired circuit and/or a logic device that is arranged such that the method as described herein is executable thereon.

According to an embodiment, the device is a communication device, in particular a or being associated with an OLT and/or an ONU or any other component of an optical network.

The problem stated supra is further solved by a communication system comprising the device as described herein.

Embodiments of the invention are shown and illustrated in the following figures:
- Fig.1: shows a symbolic network arrangement in an optical UDWDM network;
- Fig.2: shows an alternative symbolic network arrangement in an optical UDWDM network comprising a CWDM splitter.

This approach suggests using (at least) two OLTs in order to provide an efficient protection scheme. However, both OLTs are connected to a splitter site via disjunctive fibers.

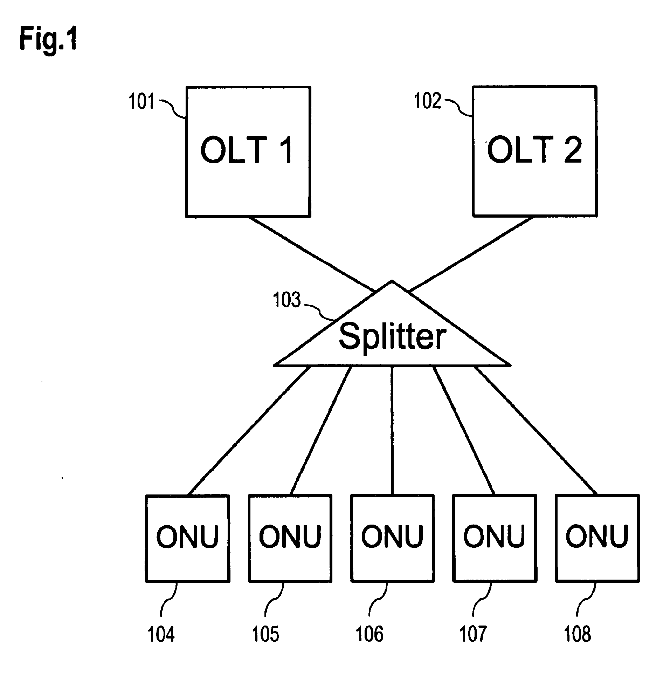

**Fig.1** shows a symbolic network arrangement in an optical UDWDM network comprising two OLTs 101, 102, each of which being connected to ONUs 104 to 108 via a splitter 103.

In classical protection schemes, one of the OLTs would be on hot standby, but not transmitting data. In case a signal loss event is detected, the standby OLT is activated and its transmission lasers are switched on. This usually takes some time resulting in a significant delay.

In the proposed schemes, both UDWDM OLTs may continuously transmit light. Each ONU is free to select an OLT thereby allowing and/or enabling load sharing between said OLTs. If one OLT fails, the ONUs losing their connection just select a wavelength from the other OLT and get connected to or supplied by the other (still active) OLT.

As an option, the spectra from the two OLTs may be interleaved such that the wavelengths provided are alternating between the OLTs, in particular throughout the whole spectrum.

The approach further comprises the following advantages:
a) In case a failure at one OLT or on one fiber is detected, the ONU may scan a subsequent adjacent wavelength and allocate such wavelength (if it can be allocated). Thus, switching to an alternative wavelength can be achieved with only a small delay. In particular, requirements set forth by some operators to not lose a connection for more than 50ms can be met.
b) A CWDM splitter can be deployed within the-splitter tree and still the OLTs are be able to serve all CWDM bands.

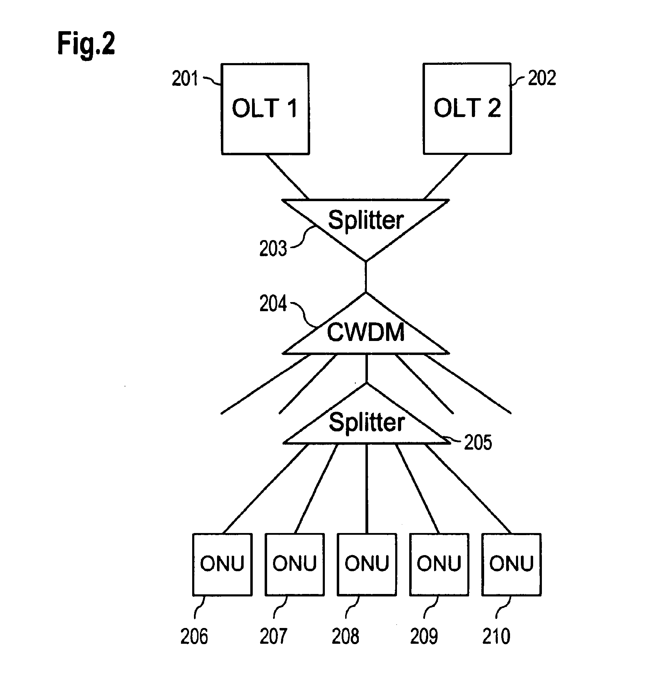

**Fig.2** shows a symbolic network arrangement in an optical UDWDM network comprising two OLTs 201, 202, each of which being connected to ONUs 206 to 210 via several splitters 203 to 205, wherein at least one such splitter 104 is a CWDM splitter.

The protection switch decision can be handled by the ONU and/or by the OLT. If the OLT fails, the ONU may decide to switch to an alternative OLT (or to the other OLT if there are two OLTs).

If the OLT does not fail, but has lost connectivity to the core network, the OLT may notify ONUs currently connected to this OLT advising the ONUs to switch to the other OLT.

As an alternative, the OLT can trigger protection switching to the alternative OLT in case of maintenance, e.g., in case the OLT hardware is to be repaired or replaced.

Whatever device decides to initiate protection switching, such activity may be visible to the new OLT, because the ONUs are going to register with the new OLT. Therefore the new OLT can take over responsibility for these ONUs that decided (or have been notified) to switch to the new OLT. Hence, the new OLT may inform the core network (e.g., by signaling means) that at least one ONU has moved from the old OLT to the new OLT.

Such signaling may be done via routing protocols or via MPLS label distribution or switching protocols. Hence, protection switching in the OLT-ONU access line can be coordinated with a core-OLT.

If the OLTs operate in an interleaving mode (adjacent wavelengths being provided by alternating OLTs), each of two spectrally interleaved OLTs may track the frequencies of the other OLT to avoid collisions due to drifting laser sources.

At least one of the following embodiments may be realized:
a) A dedicated or a currently idle first ONT is locked to a wavelength from a second OLT and periodically scans for wavelengths of the second OLT. If the first OLT detects that the second OLT has drifted, the first OLT may lock to the drifted wavelength. Alternatively, the first OLT may be informed to follow the drift of the second OLT.
b) A portion of the light from each OLT can be coupled back to the other OLT and in each OLT an independent ONU-like unit may perform a functionality according to the ONU as described under a) above.
c) In case of signal loss from the first OLT, each ONU connected to that first OLT may (immediately) tune to an adjacent wavelength, which is provided by the second OLT, thus enabling a significantly reduced switching delay.

Also, a protection speed switching from one OLT to the other OLT can be optimized. During normal operation, both OLTs are active. In such state, e.g., as a matter of precaution, for each ONU (or a selection thereof) a "in case of"-wavelength of the redundant OLT can be assigned ("pre-planned assignment"). If the first OLT fails, all ONUs know exactly, which wavelengths to be allocated. This may systematically and/or statistically reduce any conflicts that may otherwise stem from the fact that all (or several) ONUs at the same time have to search for (identical) free wavelengths thereby colliding with one another.

This pre-planned assignment of redundant wavelengths can be done in the active OLT, in the redundant OLT or in a centralized management/planning system. In all cases the redundant wavelengths may be configured to the ONU via an actual active connection between the active OLT and the ONU.

As an example of implementation, this protection scheme may utilize at least two OLTs. Preferably, half of the each OLT's channels are not used in order to achieve a "1+1 redundancy". It is also possible to use more than two OLTs thereby enabling a "1:N redundancy". For example, three OLTs may use 67% of the OLT channels during normal operation, thereby reducing the cost.

### List of Abbreviations:

- CWDM: Coarse WDM
- OLT: Optical Line Terminal
- ONU: Optical Network Unit
- PD: Photo Diode
- PON: Passive Optical Network
- UDWDM: Ultra Dense WDM
- WDM: Wavelength Division Multiplex

## Claims

1. A method for data processing in an UDWDM network,
- wherein one of at least two OLTs (101,102,201,202) communicates with at least one ONU (104, 105, 106, 107, 108, 206, 207, 208, 209, 210),
- wherein the at least two OLTs are always on,
- wherein the at least two OLTs provide protection switching and load sharing, and
- wherein each of the at least one ONU selects one of the at least two OLTs.

2. The method according to any of the preceding claims, wherein wavelengths supplied by the at least two OLTs are at least partially interleaved.

3. The method according to any of the preceding claims, wherein the at least two OLTs are connected to the at least one ONU via at least one splitter.

4. The method according to claim 3, wherein said at least one splitter comprises a CWDM splitter.

5. The method according to any of the preceding claims, wherein said protection switching and/or load sharing is triggered by at least one OLT and/or by the at least one ONU.

6. The method according to any of the preceding claims, wherein at least one OLT tracks wavelengths of at least one other OLT, in particular to avoid collisions due to drifting laser sources.

7. The method according to claim 6, wherein the at least one OLT follows a wavelength drift of at least one other OLT.

8. The method according to claim 7, wherein the at least one OLT tracks a wavelength drift of the at least one other OLT and informs this at least one other OLT to adjust its wavelength.

9. The method according to any of claims 7 or 8,
- wherein the at least one OLT is optically coupled to the at least one other OLT,
- wherein the at least one other OLT performs an assessment of a wavelength drift based on the optically coupling and adjusts its wavelength based on the assessment.

10. The method according to any of the preceding claims, wherein the at least one ONU is associated with at least one backup-wavelength.

11. The method according to any of the preceding claims, wherein the at least two OLTs provide protection switching and/or load sharing by reserving a certain amount of wavelengths in order to provide in particular
- 1+1 redundancy; or
- 1:N redundancy.

12. A device comprising a and/or being associated with a processor unit and/or a hard-wired circuit and/or a logic device that is arranged such that the method according to any of the preceding claims is executable thereon.

13. The device according to claim 12, wherein said device is a communication device, in particular a or being associated with an OLT and/or an ONU.

14. Communication system comprising the device according to any of claims 12 or 13.

## Patentansprüche

1. Verfahren zur Datenverarbeitung in einem UDWDM-Netzwerk,
- wobei eines von mindestens zwei OLTs (101, 102, 201, 202) mit mindestens einer ONU (104, 105, 106,107,108, 206, 207, 208, 209, 210) kommuniziert,
- wobei die mindestens zwei OLTs immer eingeschaltet sind,
- wobei die mindestens zwei OLTs eine Schutzschaltung und eine Lastteilung bereitstellen, und
- wobei jede der mindestens einen ONU eines der mindestens zwei OLTs wählt.

2. Verfahren nach einem der vorhergehenden Ansprüche, wobei von den mindestens zwei OLTs bereitgestellte Wellenlängen mindestens teilweise verschachtelt sind.

3. Verfahren nach einem der vorhergehenden Ansprüche, wobei die mindestens zwei OLTs über mindestens einen Splitter an die mindestens eine ONU angeschlossen sind.

4. Verfahren nach Anspruch 3, wobei der mindestens eine Splitter einen CWDM-Splitter umfasst.

5. Verfahren nach einem der vorhergehenden Ansprüche, wobei die Schutzschaltung und/oder die Lastteilung durch mindestens einen OLT und/oder durch die mindestens eine ONU ausgelöst werden.

6. Verfahren nach einem der vorhergehenden Ansprüche, wobei mindestens ein OLT Wellenlängen mindestens eines anderen OLT verfolgt, um insbesondere Kollisionen aufgrund von driftenden Laserquellen zu vermeiden.

7. Verfahren nach Anspruch 6, wobei das mindestens eine OLT auf eine Wellenlängendrift von mindestens einem anderen OLT folgt.

8. Verfahren nach Anspruch 7, wobei das mindestens eine OLT eine Wellenlängendrift des mindestens einen anderen OLT verfolgt und diesen mindestens einen anderen OLT informiert, seine Wellenlänge zu verstellen.

9. Verfahren nach einem der Ansprüche 7 oder 8,
- wobei das mindestens eine OLT optisch an das mindestens eine andere OLT gekoppelt ist,
- wobei das mindestens eine andere OLT eine Beurteilung einer Wellenlängendrift auf der Basis der optischen Kopplung durchführt und seine Wellenlänge auf der Basis der Bewertung verstellt.

10. Verfahren nach einem der vorhergehenden Ansprüche, wobei die mindestens eine ONU mit mindestens einer Reservewellenlänge assoziiert ist.

11. Verfahren nach einem der vorhergehenden Ansprüche, wobei die mindestens zwei OLTs eine Schutzschaltung und/oder eine Lastteilung bereitstellen durch Reservieren einer bestimmten Menge an Wellenlängen, um insbesondere eine
- 1+1-Redundanz oder
- 1:N-Redundanz bereitzustellen.

12. Einrichtung, umfassend eine und/oder assoziiert mit einer Prozessoreinheit und/oder einer hartverdrahteten Schaltung und/oder einer Logikeinrichtung, die derart angeordnet ist, dass das Verfahren gemäß einem der vorhergehenden Ansprüche darauf ausgeführt werden kann.

13. Einrichtung nach Anspruch 12, wobei die Einrichtung eine Kommunikationseinrichtung ist, insbesondere ein OLT und/oder eine ONU oder damit assoziiert ist.

14. Kommunikationssystem umfassend die Einrichtung nach einem der Ansprüche 12 oder 13.

## Revendications

1. Un procédé de traitement de données dans un réseau UDWDM,
- dans lequel un d'au moins deux OLT (101, 102, 201, 202) communique avec au moins une ONU (104, 105, 106, 107, 108, 206, 207, 208, 209, 210),
- dans lequel les au moins deux OLT sont toujours activés,
- dans lequel les au moins deux OLT fournissent une commutation de protection et un partage de charges, et
- dans lequel chacune des au moins une ONU sélectionne l'un des au moins deux OLT.

2. Le procédé selon l'une quelconque des revendications précédentes, dans lequel des longueurs d'onde fournies par les au moins deux OLT sont au moins partiellement entrelacées.

3. Le procédé selon l'une quelconque des revendications précédentes, dans lequel les au moins deux OLT sont raccordés à la au moins une ONU par l'intermédiaire d'au moins un séparateur.

4. Le procédé selon la revendication 3, dans lequel ledit au moins un séparateur comprend un séparateur CWDM.

5. Le procédé selon l'une quelconque des revendications précédentes, dans lequel ladite commutation de protection et/ou ledit partage de charges sont déclenchés par au moins un OLT et/ou par la au moins une ONU.

6. Le procédé selon l'une quelconque des revendications précédentes, dans lequel au moins un OLT surveille des longueurs d'onde d'au moins un autre OLT, en particulier pour éviter des collisions dues à des sources laser en dérive.

7. Le procédé selon la revendication 6, dans lequel le au moins un OLT suit une dérive de longueur d'onde d'au moins un autre OLT.

8. Le procédé selon la revendication 7, dans lequel le au moins un OLT surveille une dérive de longueur d'onde du au moins un autre OLT et informe cet au moins un autre OLT afin qu'il ajuste sa longueur d'onde.

9. Le procédé selon l'une quelconque des revendications 7 ou 8,
- dans lequel le au moins un OLT est couplé optiquement à au moins un autre OLT,
- dans lequel le au moins un autre OLT exécute une évaluation d'une dérive de longueur d'onde en fonction du couplage optique et ajuste sa longueur d'onde en fonction de l'évaluation.

10. Le procédé selon l'une quelconque des revendications précédentes, dans lequel la au moins une ONU est associée à au moins une longueur d'onde de secours.

11. Le procédé selon l'une quelconque des revendications précédentes, dans lequel les au moins deux OLT fournissent une commutation de protection et/ou un partage de charges en réservant une certaine quantité de longueurs d'onde afin de fournir en particulier
- une redondance 1+1, ou
- une redondance 1:N.

12. Un dispositif comprenant et/ou étant associé à une unité de traitement et/ou un circuit câblé et/ou un dispositif logique qui est agencé de sorte que le procédé selon l'une quelconque des revendications précédentes soit exécutable sur ceux-ci.

13. Le dispositif selon la revendication 12, dans lequel ledit dispositif est un dispositif de communication, en particulier un, ou étant associé à un, OLT et/ou une ONU.

14. Un système de communication comprenant le dispositif selon l'une quelconque des revendications 12 ou 13.
